# EUROPEAN PATENT APPLICATION

(11) **EP 2 667 291 A1**
(43) Date of publication of application: **27.11.2013**
(21) Application number: 13163619.3
(22) Date of filing: 12.04.2013
(51) Int. Cl.: G06F 3/0485, G06F 3/0346

(54) **Method and apparatus for moving an object**

(30) Priority: 02.05.2012 KR 20120046393
(71) Applicant: Samsung Electronics Co., Ltd, Gyeonggi-do 443-742 (KR)
(72) Inventor: Kwon, Woo-Up, Seoul (KR)
(74) Representative: Birchenough, Lewis

(57) **Abstract**

An apparatus and a method for moving an object(s) in an electronic device are provided. The method for moving the object(s) includes detecting a tilt change of the electronic device, and moving the object displayed on a display according to the tilt change of the electronic device. An electronic device comprising a display, at least one processor, a memory and at least one program stored in the memory and configured for execution by the at least one processor, wherein the program comprises at least one instruction configured to detect a tilt change of the electronic device, and to move an object displayed on the display according to the tilt change of the electronic device.

## Description

### TECHNICAL FIELD

The present disclosure relates generally to an electronic device. More particularly, the present disclosure relates to an apparatus and a method for moving an object(s) in an electronic device.

### BACKGROUND

A portable terminal device, which is one of necessities in the modern life on account of its easy portability, is advancing to a multimedia device which provides various services such as information input/output function and data storage.

As a multimedia service is provided, an amount of information to be processed and displayed by the portable electronic device is increasing. Naturally, a portable electronic device including a touch screen for increasing a display size by enhancing space usage is attracting more attention.

The touch screen is an input/output device for inputting and displaying information using a single screen. Accordingly, when the portable electronic device adopts the touch screen, the portable electronic device can increase a display area by removing a separate input device such as keypad.

As discussed above, when the display area of the portable electronic device increases, a user of the portable electronic device may not easily control every information displayed in the display area using a single hand.

### SUMMARY

Provided is an apparatus and a method for providing a user interface for easy manipulation of display information of a display area in an electronic device.

Another aspect of the present disclosure is to provide an apparatus and a method for moving an object(s) based on tilt information in an electronic device including a touch screen.

Yet another aspect of the present disclosure is to provide an apparatus and a method for moving an object(s) based on tilt information in an electronic device including a touch screen.

Still another aspect of the present disclosure is to provide an apparatus and a method for rearranging a object(s) based on tilt information in an electronic device including a touch screen.

According to one aspect of the present disclosure, a method for moving a screen in an electronic device includes detecting a tilt change of the electronic device, and moving a location of object displayed on a display according to the tilt change of the electronic device.

The moving of the display information location may include moving a whole window, e.g., a background window displayed on the display in a tilt change direction of the electronic device.

The moving of the display information location may include moving at least one object location among a plurality of objects displayed on the display in the tilt change direction of the electronic device.

According to another aspect of the present disclosure, an electronic device includes a display, at least one processor, a memory and at least one program stored in the memory and configured for execution by the at least one processor. The program includes at least one instruction for detecting a tilt change of the electronic device, and moving a location of display information displayed in the display according to the tilt change of the electronic device.

The instruction for moving the window can move the whole window displayed on the display in a tilt change direction of the electronic device.

The instruction for moving the window moves at least one object among a plurality of objects displayed on the display in the tilt change direction of the electronic device.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a block diagram of an electronic device according to an exemplary embodiment of the present disclosure;

FIG. 2 is a high-level block diagram of a processor unit according to an exemplary embodiment of the present disclosure;

FIG. 3 is a flowchart of a method for moving a object according to an exemplary embodiment of the present disclosure;

FIG. 4 is a flowchart of a method for moving a location of the background window according to an exemplary embodiment of the present disclosure;

FIGS. 5A through 5D illustrate exemplary images of moving the background window according to an exemplary embodiment of the present disclosure;

FIG. 6 is a flowchart of a method for moving objects according to an exemplary embodiment of the present disclosure; and

FIGS. 7A, 7B, and 7C illustrate exemplary images of moving the objects according to an exemplary embodiment of the present disclosure.

Throughout the drawings, like reference numerals will be understood to refer to like parts, components and structures.

### DETAILED DESCRIPTION

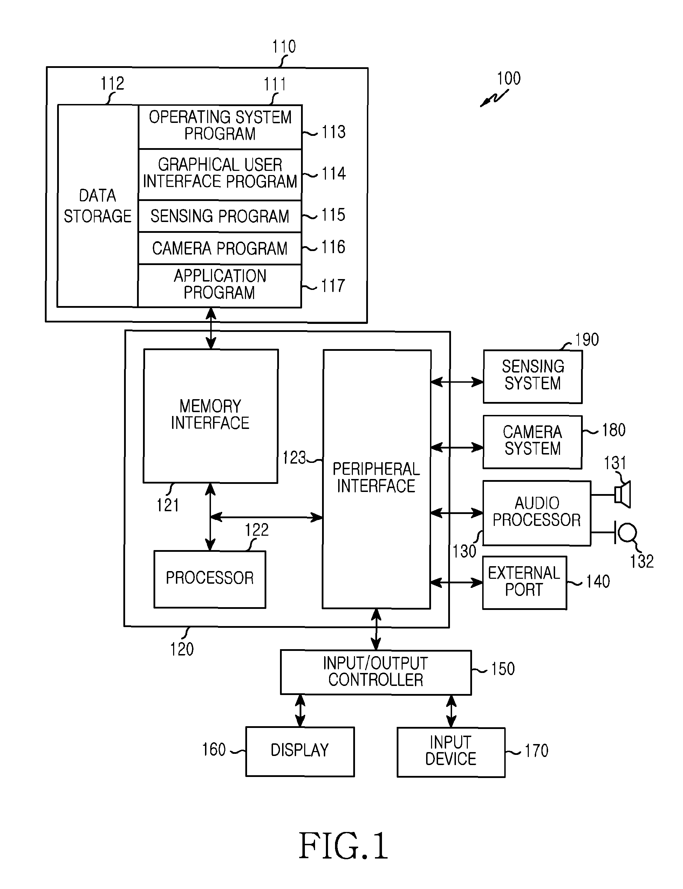

FIGURES 1 through 7C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present disclosure provide a technique for moving an object in an electronic device including a touch screen. Herein, the object(s) includes any windows displayed on a display, as any objects displayed on a display for providing a service(s), any user interfaces using graphics including menus.

Hereinafter, the electronic device embraces a mobile communication terminal including a touch screen, a Personal Digital Assistant (PDA), a laptop, a smart phone, a netbook, a television, a Mobile Internet Device (MID), an Ultra Mobile Personal Computer (UMPC), a tablet PC, a navigation system, and an MP3 player. Still, the object can be moved even in an electronic device without a touch screen.

FIG. 1 is a high-level block diagram of an electronic device according to an exemplary embodiment of the present disclosure.

As shown in FIG. 1, the electronic device 100 includes a memory 110, a processor unit 120, an audio processor 130, an external port 140, an input/output controller 150, a display 160, an input device 170, a camera system 180, and a sensing system 190. Herein, a plurality of memories 110 and a plurality of external ports 140 can be provided.

The components are described as follow.

The memory 110 includes a program storage 111 for storing a program to control operations of the electronic device 100, and a data storage 112 for storing data generating in the program execution.

The program storage 111 includes an operating system program 113, a Graphical User Interface (GUI) 114, a camera program 115, a sensing program 116, and at least one application program 117. Herein, the program in the program storage 111 can be referred to as an instruction set which is a set of instructions.

The operating system program 113 includes at least one software component for controlling general system operations. The operating system program 113 processes normal communication between hardware devices and software components.

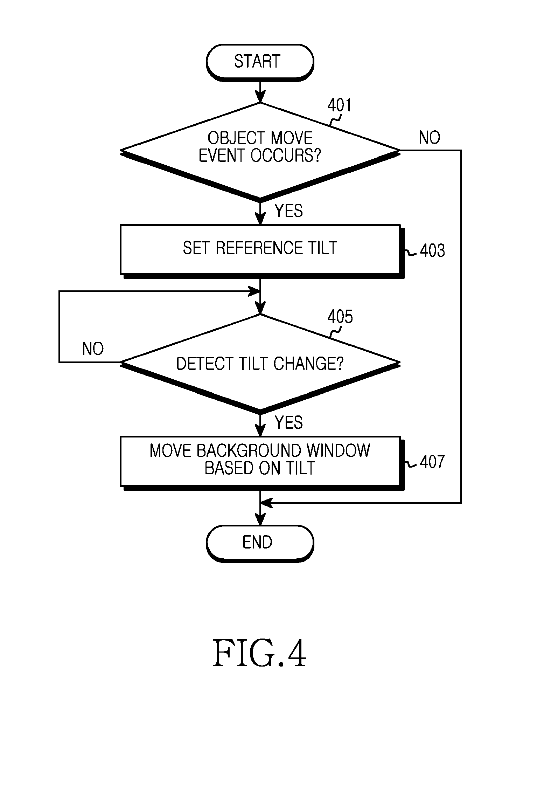

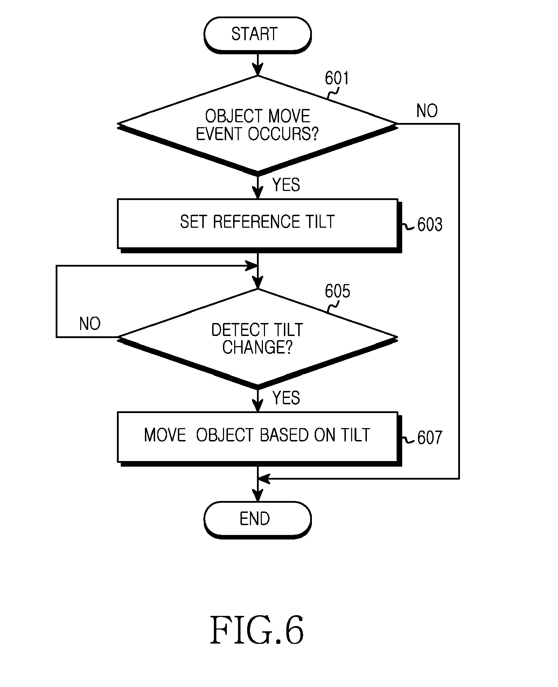

The GUI 114 includes at least one software component for providing a user interface between a user and the electronic device 100. That is, the GUI program 114 includes at least one software component for displaying user interface information on the display 160. In so doing, the GUI program 114 includes an instruction for moving a screen displayed in the display 160 according to tilt information of the electronic device 100. For example, the GUI program 114 can include an instruction for moving a location of the whole object, e.g., background window displayed in the display 160 according to the tilt information of the electronic device 100 as shown in FIG. 4. For example, the GUI program 114 can include an instruction for moving a location of at least one object in the window displayed in the display 160 according to the tilt information of the electronic device 100 as shown in FIG. 6. When an object move event occurs, the GUI program 114 can obtain the tilt information to move the object by setting a reference tilt for the object movement using the sensing system 190. Herein, the tilt information includes at least one of a tilt direction and a tilt change. The control object includes at least one object with a control function among objects forming the screen displayed on the display 160.

The camera program 115 includes a software component for providing a camera service through the camera system 180.

The sensing program 116 includes a software component for checking the tilt information of the electronic device 100. For example, the sensing program 116 includes an instruction for acquiring the tilt information of the electronic device 100 through the sensing system 190.

The application program 117 includes a software component for at least one application program installed in the electronic device 100.

The processor unit 120 includes a memory interface 121, at least one processor 122, and a peripheral interface 123. Herein, the memory interface 121, the at least one processor 122, and the peripheral interface 123 of the processor unit 120 can be integrated onto at least one integrated circuit or implemented using separate components.

The memory interface 121 controls access of the component such as processor 122 or peripheral interface 123, to the memory 110.

The peripheral interface 123 controls connection between an input/output peripheral of the electronic device 100 and the processor 122 and the memory interface 121.

The processor 122 controls the electronic device 100 to provide various multimedia services using at least one software program. In so doing, the processor 122 controls to execute at least one program stored in the memory 110 and to provide the service according to the corresponding program. For example, the processor 122 can move the whole window, e.g., the background window displayed on the display 160 by executing the GUI program 114 stored in the program storage 111 as shown in FIG. 4. For example, the processor 122 may move the control object of the screen displayed on the display 160 by executing the GUI program 114 stored in the program storage 111, as shown in FIG. 6.

The audio processor 130 provides an audio interface between the user and the electronic device 100 through a speaker 131 and a microphone 132.

The external port 140 includes a connection interface for connecting the electronic device 100 with an external electronic device directly or over a network. For example, the external port 140 includes a Universal Serial Bus (USB) port and a High-Definition Multimedia Interface (HDMI) port.

The input/output controller 150 provides an interface between the input/output device such as display 160 and input device 170, and the peripheral interface 123.

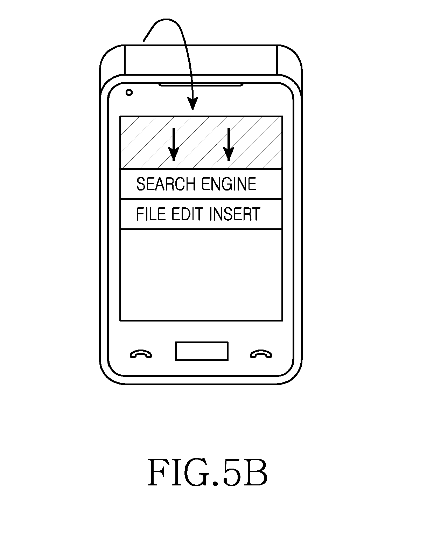

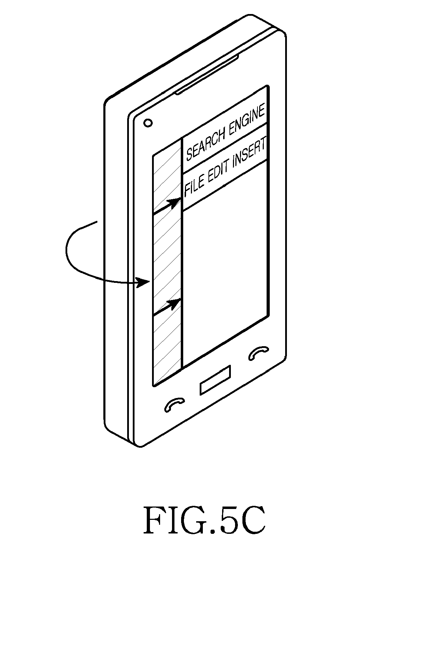

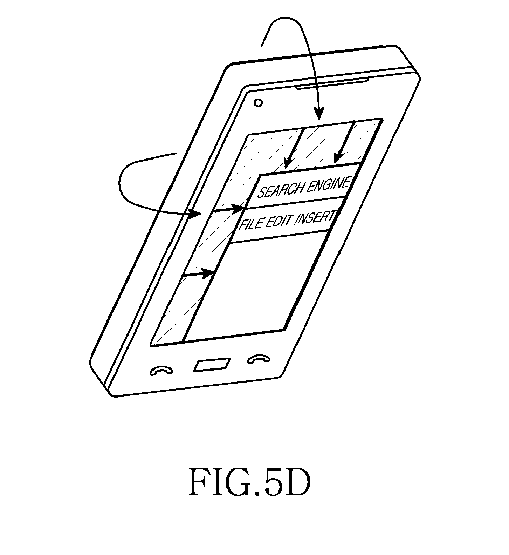

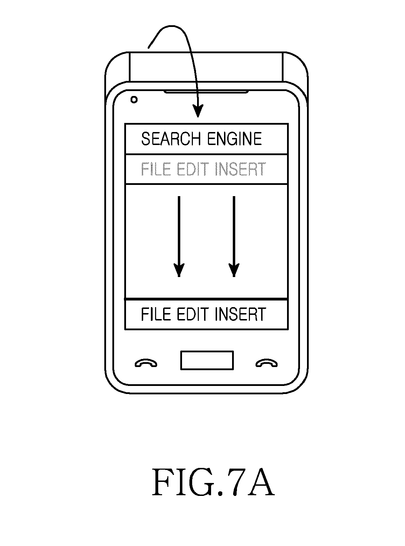

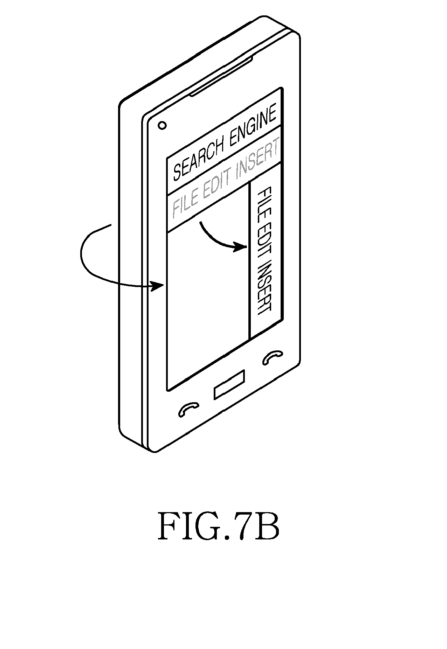

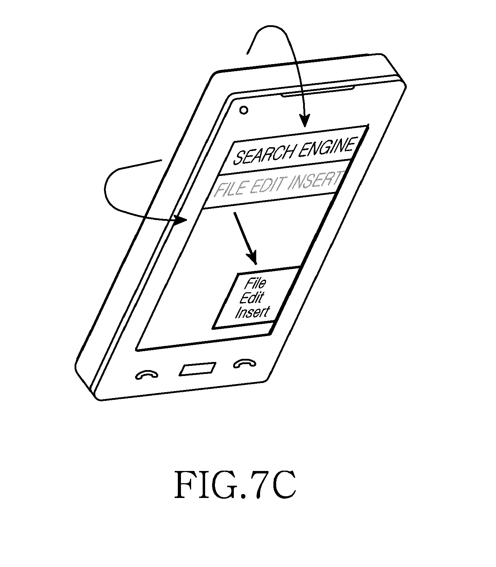

The display 160 displays status information of the electronic device 100, a character input by the user, a moving picture, and a still picture. For example, the display 160 can move and display the screen using the GUI program 114 as shown in FIGS. 5B, 5C, and 5D. For example, the display 160 can move and display the control object on the screen using the GUI program 114, as shown in FIGS. 7A, 7B, and 7C.

The input device 170 provides input data generated by a user's selection to the processor unit 120 through the input/output controller 150. For example, the input device 170 can include at least one of a keypad including at least one hardware button and a touch pad for detecting touch information. For example, the input device 170 can provide the touch information sensed by the touch pad to the processor 122 through the input/output controller 150.

The camera system 180 captures moving picture data and still picture data.

The sensing system 190 detects the tilt of the electronic device 100. For example, the sensing system 190 includes at least one of an acceleration sensor, a geomagnetic sensor, a gyroscope, and an altitude sensor.

The electronic device 100 can further include a communication system (not shown) for executing a communication function for voice communication and data communication. The communication system can be divided into a plurality of communication submodules which support different communication networks. Herein, the communication networks include, but not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless Local Area Network (LAN), a Bluetooth network, and a Near Field Communication (NFC) network.

In one exemplary embodiment, the electronic device 100 can move the screen displayed in the display 160 by running the GUI program 114 stored in the program storage 111 through the processor 122.

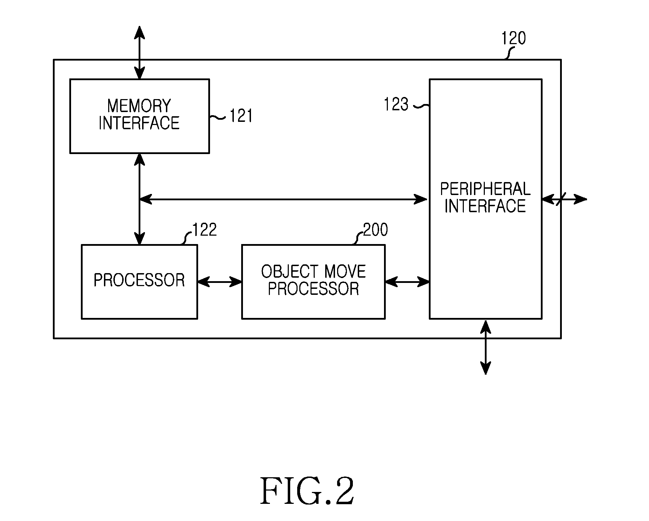

Alternatively, the electronic device 100 can include an object movement processor for moving the screen displayed in the display 160 as shown in FIG. 2.

FIG. 2 is a high-level block diagram of the processor unit according to an exemplary embodiment of the present disclosure. Herein, only a high-level structure of the processor unit 120 in the block diagram of the electronic device 100 of FIG. 1 is depicted in FIG. 2.

As shown in FIG. 2, the processor unit 120 includes a memory interface 121, at least one processor 122, a peripheral interface 123, and an object movement processor 200. Herein, the memory interface 121, the at least one processor 122, the peripheral interface 123, and the object movement processor 200 of the processor unit 120 can be integrated onto at least one integrated circuit or implemented using separate components.

The memory interface 121 controls the access of the component such as processor 122 or peripheral interface 123, to the memory 110.

The peripheral interface 123 controls the connection between an input/output peripheral of the electronic device 100 and the processor 122 and the memory interface 121.

The processor 122 controls the electronic device 100 to provide various multimedia services using at least one software program. In so doing, the processor 122 controls to execute at least one program stored in the memory 110 of FIG. 1 and to provide the service according to the corresponding program.

The object movement processor 200 controls to move an object (s) displayed in the display 160. For example, the object movement processor 200 can control to move the whole window e.g., the background window displayed in the display 160 according to the tilt information of the electronic device 100 as shown in FIG. 4. For example, the object movement processor 200 can control to move the location of the control object displayed on the display 160 according to the tilt information of the electronic device 100 as shown in FIG. 6. When the object move event occurs, the object movement processor 200 can obtain the tilt information to move the object by setting the reference tilt for the object movement using the sensing system 190 to. Herein, the tilt information includes at least one of the tilt direction and the tilt change. The control object includes at least one object with the control function among the objects displayed on the display 160.

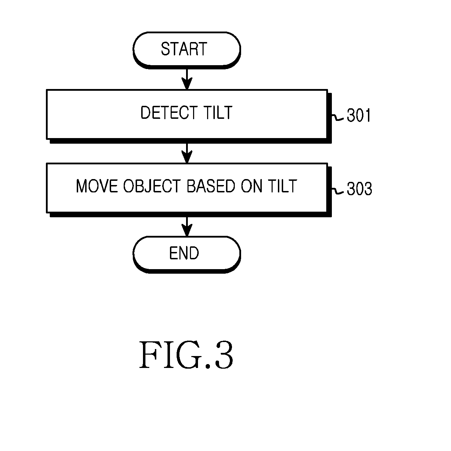

FIG. 3 is a flowchart of a method for moving the screen according to an exemplary embodiment of the present disclosure.

Referring to FIG. 3, the electronic device detects a tilt change of the electronic device in step 301. For example, the electronic device detects the tilt change of the electronic device using the sensing system 190 of FIG. 1.

In step 303, the electronic device moves the object on the display by considering the tilt change of the electronic device. For example, the electronic device can move the background window on the display toward the tilt change direction as shown in FIGS. 5B, 5C, and 5D. For example, the electronic device can move the objects on the window on the display in the tilt change direction as shown in FIGS. 7A, 7B, and 7C.

Next, the electronic device finishes this process.

As such, the electronic device can move the object on the display according to the tilt. In so doing, the electronic device can include at least one means for executing steps 301 and 303 to move the object.

Since the electronic device moves a background window or an object on the display according to the tilt, the user can select the control object simply with one of fingers holding the electronic device.

FIG. 4 is a flowchart of a method for moving a background window according to an exemplary embodiment of the present disclosure.

Referring to FIG. 4, the electronic device determines whether the object move event occurs in step 401. For example, the electronic device can determine whether an object move button is selected. For example, the electronic device can determine whether the object move event is triggered by, e.g., an input of the hardware button. For example, the electronic device can determine whether the object move event occurs based on motion information of the electronic device. For example, the electronic device can determine whether the object move event occurs based on the hardware button input information and motion information of the electronic device. For another example, the electronic device can determine whether the object move event occurs based on the touch information of the touch screen. In yet another example, the electronic device can determine whether the object move event occurs based on the touch information of the touch screen and the motion information of the electronic device.

When the object move event has not taken place for a certain time, the electronic device finishes this process.

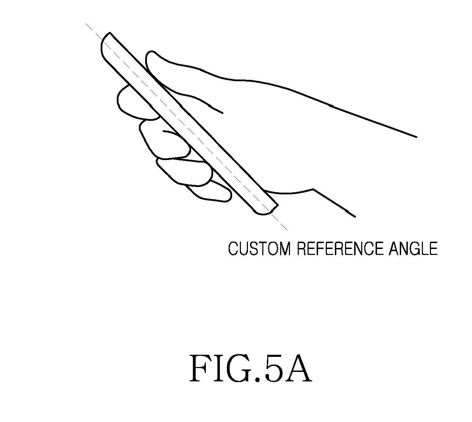

Alternatively, when the object move event has taken place, the electronic device sets a reference tilt in step 403. For example, when the object move event occurs as shown in FIG. 5A, the electronic device can configure the reference tilt of the electronic device using the sensing system 190. In so doing, the electronic device can display information of the object move event occurrence on the display 160. For example, the electronic device may obtain a preset reference tilt.

In step 405, the electronic device determines whether its tilt change is detected.

Upon detecting the tilt change, the electronic device moves the location of the whole window proportionally based on the tilt change in step 407. For example, when detecting the downward tilt change, the electronic device can move the whole window downwards as shown in FIG. 5B. For example, when detecting the right tilt change, the electronic device can move the whole window to the right as shown in FIG. 5C. For example, when detecting the lower- right tilt change, the electronic device can move the whole window in the lower right direction as shown in FIG. 5D. In so doing, the electronic device can move the whole screen by a preset reference distance.

In this another exemplary embodiment, the electronic device sets the reference tilt and then determines whether the tilt changes. When the tilt change has not been detected within a predetermined time after the reference tilt is set, the electronic device can recognize no object movement. Hence, the electronic device can finish this object movement process.

As such, when the whole window location is moved according to the tilt change of the electronic device, the electronic device can move the whole window proportionally based on the tilt change. For example, when detecting the tilt change in step 405 of FIG. 4, the electronic device determines the movement distance of the whole window based on the tilt change. Next, the electronic device can move the whole window proportionally based on the tilt change in the tilt change direction in step 407. Hence, the electronic device can increase the movement distance of the whole window as the tilt change increases, or shorten the movement distance of the whole window as the tilt change reduces.

The electronic device can adjust a location movement speed of the whole window according to the tilt change. For example, when detecting the tilt change in step 405 of FIG. 4, the electronic device determines the movement speed of the whole window based on the tilt change. Next, the electronic device can move the whole window location in the tilt change direction at the movement speed based on the tilt change in step 407. Hence, the electronic device can increase the movement speed of the whole window as the tilt change increases, or decrease the movement speed of the whole screen as the tilt change reduces.

The electronic device can adjust the movement distance and the movement speed of the whole window according to the tilt change. For example, when detecting the tilt change in step 405 of FIG. 4, the electronic device determines the movement speed and the movement distance of the whole window based on the tilt change. Next, the electronic device can move the whole window proportionally in the tilt change direction at the movement speed based on the tilt change in step 407.

FIG. 6 is a flowchart of a method for moving an object(s) according to an exemplary embodiment of the present disclosure.

Referring to FIG. 6, the electronic device determines whether the object move event occurs in step 601. For example, the electronic device can determine whether the object move button is selected. For example, the electronic device can determine whether the screen move event occurs based on the input information of the hardware button. For another example, the electronic device can determine whether the object move event occurs based on the hardware button input information and the motion information of the electronic device. Alternatively, the electronic device can determine whether the object move event occurs based on touch information of a touch screen. For example, the electronic device can determine whether the object move event occurs based on the touch information of the touch screen and the motion information of the electronic device.

When the object move event does not occur, the electronic device finishes this process.

Alternatively, when the screen move event takes place, the electronic device sets the reference tilt in step 603. For example, when the object move event occurs as shown in FIG. 5A, the electronic device can set the tilt of the electronic device detected by the sensing system 190 to the reference tilt. In so doing, the electronic device can display the object move event occurrence information in the display 160. For example, the electronic device can obtain the preset reference tilt.

In step 605, the electronic device determines whether its tilt change is detected.

Upon detecting the tilt change, the electronic device moves the object on the screen based on the tilt change in step 607. That is, the electronic device can relocate an object(s) on the screen based on the tilt change. For example, when detecting the downward tilt change, the electronic device can move the menu objects, "File menu", "Edit menu" and "Insert menu" downwards in the screen as shown in FIG. 7A. In so doing, the electronic device can move the menu objects to the bottom of the display 160. For example, when detecting the right tilt change as shown in FIG. 7B, the electronic device can move the objects, "File menu", "Edit menu" and "Insert menu" to the right on the screen as shown in FIG. 7B. In so doing, the electronic device can move the objects to the right of the display 160. For example, when detecting the lower right tilt change, the electronic device can move the objects, "File menu", "Edit menu" and "Insert menu" to the lower right part on the screen as shown in FIG. 7C. In so doing, the electronic device can move the objects to the lower right corner of the display 160. When changing the location of an object(s), the electronic device can display the original object location in the display 160 as shown in FIGS. 7A, 7B and 7C.

In this exemplary embodiment, the electronic device sets the reference tilt and then determines whether the tilt changes. When the tilt change has not been detected within the predetermined time after the reference tilt is configured, the electronic device can recognize no object movement. Hence, the electronic device can finish this process.

As such, when an object(s) is moved according to the tilt change of the electronic device, the electronic device can move an object location proportionally based on the tilt change. For example, when detecting the tilt change in step 605 of FIG. 6, the electronic device determines the movement distance of the object(s) based on the tilt change. Next, the electronic device can change the object location proportionally based on the tilt change in the tilt change direction in step 607. Hence, the electronic device can increase the movement distance of the control object as the tilt change increases, or shorten the movement distance of the control object as the tilt change reduces.

The electronic device can adjust the movement speed of the control object according to the tilt change. For example, when detecting the tilt change in step 605 of FIG. 6, the electronic device determines the movement speed of the object by considering the tilt change. Next, the electronic device can move the object in the tilt change direction at the movement speed based on the tilt change in step 607. Hence, the electronic device can increase the movement speed of the control object as the tilt change increases, and decrease the movement speed of the control object as the tilt change reduces.

The electronic device can adjust the movement speed and the movement distance of the object according to the tilt change. For example, when detecting the tilt change in step 605 of FIG. 6, the electronic device determines the movement speed and the movement distance of the object(s) based on the tilt change. Next, the electronic device can move the control object location proportionally in the tilt change direction at the movement speed based on the tilt change in step 607.

As such, the electronic device can move the whole window according to the tilt change. In so doing, the electronic device can change the size of the area displaying the window on the display 160 according to the tilt change.

As set forth above, the electronic device including the touch screen moves a window(s) or rearranges an object(s) based on the tilt information. Therefore, a user of the electronic device can easily control at least one object displayed in the display area with the single hand.

The above-described methods according to the embodiments as described in the claims and/or the specification of the present disclosure can be implemented in hardware or software alone or in combination.

For software, a computer-readable storage medium containing one or more programs (software modules) can be provided. One or more programs stored to the computer-readable storage medium are configured for execution of one or more processors of the electronic device. One or more programs include instructions making the electronic device execute the methods according to the embodiments as described in the claims and/or the specification of the present disclosure.

Such programs (software module, software) can be stored to a random access memory, a non-volatile memory including a flash memory, a Read Only Memory (ROM), an Electrically Erasable Programmable ROM (EEPROM), a magnetic disc storage device, a Compact Disc ROM (CD-ROM), Digital Versatile Discs (DVDs) or other optical storage devices, and a magnetic cassette. Alternatively, the programs can be stored to a memory combining part or all of those recording media. A plurality of memories may be equipped.

The programs can be stored to an attachable storage device of the electronic device accessible via the communication network such as Internet, Intranet, Local Area Network (LAN), Wide LAN (WLAN), or Storage Area Network (SAN), or a communication network by combining the networks. The storage device can access the electronic device through an external port.

A separate storage device in the communication network may access a portable electronic device.

While the disclosure has been shown and described with reference to certain exemplary embodiments thereof, it will be understood by those skilled in the art that various changes in form and details may be made therein without departing from the spirit and scope of the disclosure as defined by the appended claims and their equivalents.

## Claims

1. A method for moving an object in an electronic device, comprising:
detecting a tilt change of the electronic device; and
moving the object displayed on a display based on the tilt change.

2. The method of claim 1, wherein the moving of the object comprises:
moving a background window displayed on the display in a tilt change direction of the electronic device.

3. The method of claim 1, wherein the moving of the object comprises:
determining at least one of a movement distance and a movement speed of the object based on the tilt change of the electronic device; and
moving a background window displayed on the display in a tilt change direction of the electronic device by the at least one of the movement distance and the movement speed of the object.

4. The method of claim 1, wherein the moving of the object comprises:
moving at least one object among a plurality of objects displayed on the display in a tilt change direction of the electronic device.

5. The method of claim 1, wherein the moving of the display information location comprises:
determining at least one of a movement distance and a movement speed of the display information by considering the tilt change of the electronic device; and
moving at least one object location among a plurality of objects displayed on the display in the tilt change direction of the electronic device based on the at least one of the movement distance and the movement speed of the object.

6. An electronic device comprising:
a display;
at least one processor;
a memory; and
at least one program stored in the memory and configured for execution by the at least one processor,
wherein the program comprises at least one instruction configured to detect a tilt change of the electronic device, and to move an object displayed on the display according to the tilt change of the electronic device.

7. The method of claim 1 or the electronic device of claim 6, wherein the display comprises a touch screen.

8. The method of claim 1 or the electronic device of claim 6, wherein the detecting of the tilt change comprises:
when an object move event occurs, detecting the tilt change of the electronic device.

9. The method of claim 8 or the electronic device of claim 8, wherein the object move event is triggered by at least one of touch information of the touch screen, hardware button input information, and motion information of the electronic device.

10. The method of claim 1 or the electronic device of claim 6, wherein the detecting of the tilt change comprises:
detecting the tilt change of the electronic device using at least one of an acceleration sensor, a geomagnetic sensor, a gyroscope, and an altitude sensor.

11. The electronic device of claim 6, wherein the program comprises at least one instruction configured to move the background window displayed on the display in a tilt change direction of the electronic device.

12. The electronic device of claim 6, wherein the program comprises at least one instruction configured to determine at least one of a movement distance and a movement speed of the object based on the tilt change of the electronic device, and to move a background window displayed on the display in the tilt change direction of the electronic device by the at least one of the movement distance and the movement speed of the display information.

13. The electronic device of claim 6, wherein the program comprises at least one instruction configured to move at least one object among a plurality of objects displayed on the display in the tilt change direction of the electronic device.

14. The method of claim 4 or the electronic device of claim 13, wherein the object comprises at least one object with a control function among the objects in the display information.

15. The electronic device of claim 6, wherein the program comprises at least one instruction configured to determine at least one of a movement distance and a movement speed of the object based on the tilt change of the electronic device, and to move at least one object location among a plurality of objects displayed on the display in the tilt change direction of the electronic device by the at least one of the movement distance and the movement speed.
